# EUROPEAN PATENT APPLICATION

(11) **EP 1 548 530 A1**
(43) Date of publication of application: **29.06.2005**
(21) Application number: 03293317.8
(22) Date of filing: 22.12.2003
(51) Int. Cl.: G05B 19/418

(54) **Method of controlling swarm of robots**

(71) Applicant: ALCATEL, 75008 Paris (FR)
(72) Inventor: Weis, Bernd Xaver, Dr.-Ing., 70825 Korntal (DE); Weik, Hartmut, Dipl.-Ing., 70195 Stuttgart (DE)
(74) Representative: LOUIS, PÖHLAU, LOHRENTZ

(57) **Abstract**

The invention concerns a method of controlling a swarm of robots (71 to 75, 8), each having a communication unit for communicating with a control center (2) and/or other robots of the swarm, as well as a control device for executing this method. The control device determines position data of one or more robots (71 to 75) of the swarm that act as relay robots for supporting the communication between the control center (2) and one or more robots of the swarm acting in the neighborhood of a target (3). The one or more relay robots (71 to 75) are positioned according to the determined position data. A communication connection between the control center (2) and the robot (8) acting in the neighborhood of the target (3) is established via one or more of the positioned relay robots (71 to 75).

## Description

The present invention relates to a method of controlling a swarm of robots, each having a communication unit for communicating with a control center and/or other robots of the swarm as well as a control device for controlling at least one robot of the swarm of robots.

Robots have acquired their position in many industries, for example automobile industry where robots have taken over many tasks, e.g. welding. Further, highly versatile remote controlled robots are today used for a lot of applications, for example they are used in airports to inspect suspect baggages, in plants for handling hazard materials or rescue task in a catastrophic situation where rescue personnel can't approach the site due to various dangers.

A communication system for such robots has to satisfy high level real time, bandwidth, safety and security demands. E.g. it is often necessary to provide a real time video-communication connection since any latency in such communication increases the risk of destruction of the robots.

Today, analogue radio frequency band or a coax cable that has to be carried by the robot itself and connects the robot with a control center are used for communications between a robot and a control center. The use of a coax cable has drawbacks with respect to a maneuverability and range of coverage of the robot. These disadvantages even exist in case of using a communication system based on analogue radio frequency bands, due to the high bandwidth, safety and security requirements of such robots. Any interference and weaking of the radio signal, e.g. through obstacles, increase the risk to destruct the robot.

It is the object of the present invention to provide an improved communication between a robot and another robot or a robot control device.

The object of the present invention is achieved by a method of controlling a swarm of robots comprising a plurality of robots each having a communication unit for communicating with a control center and/or other robots of the swarm, the method comprises the steps of: determining position data of one or more robots of the swarm that act as relay robots for supporting the communication between the control center and one or more robots of the swarm acting in the neighborhood of a target; positioning the one or more relay robots according to the determined position data; and establishing a communication connection between the control center and the robot acting in the neighborhood of the target via one or more of the positioned relay robots. The object of the present invention is further achieved by a control device for controlling at least one robot of the swarm of robots, the control device having a control unit for calculating positions of one or more robots of the swarm that act as relay robots for supporting the communication between a control center and one or more robots of the swarm acting in the neighborhood of target.

The present invention provides a flexible and robust communication that allows the networking of a swarm of robots for a variety of applications where the structure conditions are as such that movements and tasks need to be flexible adjusted. The use of such relay robots introduces capability of robot networking in topologically difficult environments. Thereby, the safety and security of a communication between a control center and a robot as well as the possible distance between the control center and the robot are drastically increased.

Further advantages are achieved by the embodiments of the invention indicated by the dependent claims.

Preferably, the relay robots are autonomous relay robots which are automatically positioned to enable a communication between the control center and a semi-autonomous mobile robot controlled by the operator. The positioning of these robots may be done by an iterative process of such interacting autonomous relay robots or based on a centrally executed network planning algorithm determining optimized position of such relay robots.

According to a preferred embodiment of the invention, a control unit executes a network planning algorithm for determining positions of one or more relay robots, the network planning algorithm comprises a first phase procedure computing a connectivity graph between the target and the control center and a second phase procedure calculating one or more connectivity paths between the target and the control center. The execution of such kind of network planning algorithm guaranties a fast and optimized positioning of relay robots which results in an increase of safety and security of the communication between the control center and the (semi-autonomous) robot. Further, the number of relay robots needed for a specific application may be reduced due to such optimized positioning.

Preferably, the network planning algorithm comprises a third phase procedure applying an optimization procedure on the calculated connectivity paths. Thereby, a further reduction of the number of relay robots needed for a specific scenario is achievable.

According to a preferred embodiment of the invention, the first phase procedure of the algorithm comprises the steps of: calculating connectivity areas, which are areas the communication unit of a robot or the control center can reach; determining continuation segments that are borders of connectivity areas to open space of sufficient depth; calculating neighboring connectivity areas for continuation segments; and establishing the connectivity graph wherein a node represents a connectivity area and a link between two nodes represents neighborhood relations between two connectivity areas. By (iteratively) executing the aforementioned steps, the control unit is in a position to compute the connectivity graph between the target and the control center in an efficient way. Further, it is possible to execute such kind of algorithm not only in a two-dimensional scenario, but also in a three-dimensional scenario.

A further reduction of needed computation time and effort is achieved by using both, the target and the control center as starting point of the aforementioned procedure. This approach reduces the number of steps which have to be executed for calculation of the connectivity path.

Preferably, the first phase procedure comprises the further steps of: determining a preferred direction between the control center and the target, selecting continuation segments for calculation of neighboring connectivity areas that are in the preferred direction; and repeating with a new preferred direction orthogonal to the current preferred connection. By applying this approach, the number of steps which has to be calculated for establishment of the connectivity path are further reduced, while it keeps the ability to come to a solution even in complex topologies.

Further, following method may be applied to calculate neighboring connectivity areas: The continuation segment is moved along the preferred direction until the corresponding reach of the communication systems is reached. The corresponding generating line is the orthogonal projection of the continuation segment orthogonal to the preferred direction. When obstacles are detected along the way the continuation segments may be subdivided in various subsequences. Then, these steps are repeated with a new preferred direction that is orthogonal to the current preferred direction.

Within the second phase procedure, the connectivity paths available between the target and the control center are calculated by help of the connectivity graph. Further, one or several of these paths are selected based on selection criteria's, e.g. the number of nodes between a target and a control center. Preferably, the second phase procedure determines first class links representing neighborhood relations where the borders are orthogonal to corresponding generating lines of the neighboring areas and a second class link representing neighborhood relations where the borders are parallel to corresponding generating lines of the neighboring areas. Due to the topological requirements, second class links require more relay robots as first class links. Consequently, the number of first class and second class links of a communication path may be used as further advantageous selection criteria for the second phase procedure.

These as well as other features and advantages of the invention will be better appreciated by reading the following detailed description of presently preferred exemplary embodiments taken in conjunction with according drawings of which:
- Fig. 1: is a schematic view of a swarm of robots.
- Fig. 2: is a block diagram showing a control device according to the present invention.
- Fig. 3: is a schematic view of a scenario used for demonstrating the execution of a method according to the invention.
- Fig. 4, Fig. 5a and Fig. 5b: are functional views demonstrating successive steps of computation of a method according to the invention.
- Fig. 6: is a functional view of a connectivity graph.
- Fig. 7: is a functional view of the scenario according to Fig. 2 showing the positioning of several robots.

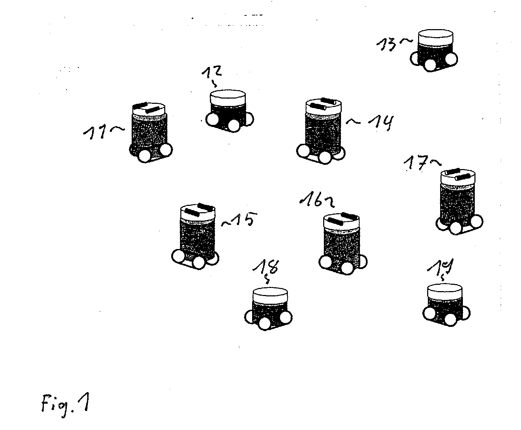

Fig. 1 shows a swarm of robots 11 to 19. Each of the robots 11 to 19 has a communication unit for communicating with a control center and/or other robots of the swarm. One or several of the robots 11 to 19 are semi-autonomous mobile robots. Semi-autonomous mobile robots do simple tasks by itself, for example, move from one point to another, but depends on expert input for more difficult tasks. A semi-autonomous mobile robot is equipped with a variety of different sensors, which enables it to make own decisions on the spot and avoid accidents through fail-save mechanisms. The overall control and supervision however is give to centralized management and control handled by a control center interacting with an operator.

In typical environments, in which semi-autonomous mobile robots are deployed, topology is not particularly structured and often unknown. Since the tasks the robot are wanted to perform are often of a critical and dangerous nature (mine sweeping,...) in an extended geography, it is mandatory that the control center is in continuous contact with the robots to help and guide them through unknown and unprecedented situations. A typical application is handling of hazardous materials, rescue task in catastrophic situations where rescue personnel can't approach the site due to various dangers, and many more. Eventually, these tasks need to be supervised by expert personnel to avoid incidents and accidents and to react to unexpected circumstances.

One or more of the robots 11 through 19 are autonomous relay robots each of which can move and provides means for relay a communication connection, i.e. it has the basic capabilities to receive, amplify and send communication signals. The relay robots supporting the communication between the control center and one or more of the semi-autonomous mobile robots needed to be supervised by the control center. The communication between the robots 11 to 19 and between the robots of the swarm and the control center is based on wireless technologies, for example based on a radio frequency based communication technology or a free-space optical communication technology. In unstructured environments, obstacles hinder a direct communication between the control center and semi-autonomous robots of the swarm. Further, limited reach of communication units and further environmental influences may hinder a direct communication between the control center and a semi-autonomous robot.

In such cases the relay robots of the swarm provide a flexible and robust communication and networking to ensure control center-robot communication and robot-robot communication. The relay robots, e.g. the robots 12, 13, 18 and 19, are positioned in such way that the communication network maintains continuous broadband communication connectivity to the semi-autonomous robots of the swarm. Further, redundant communication connections in a topologically flexible communication network are established to maintain a robust continuous communication between control center and robots.

According to a first embodiment of the invention, the positions of the relay robots are determined by help of an iterative process:

For example, a dangerous target, e.g. explosives, is to be manipulated. At the initial configuration a headquarter with a control center is established behind a building. There is one robot of the swarm available to manipulate the target and a multiply of relay robots, e.g. the robots 12, 13, 18 and 19, available to establish and maintain a communication.

When the semi-autonomous robot approaches the target, an autonomous relay robot position itself autonomously keeps the connection between the control center and the semi-autonomous robot alive. If that is not longer possible for a single autonomous relay robot, an additional autonomous relay robot is required which also positions itself autonomously to keep the connection alive. In sight of the target a second redundant connection is set up. One autonomous relay robot and/or further requested autonomous relay robots position themselves such that the second connection can be established and maintained. Then, the mobile semi-autonomous robot proceeds to the target to do the job with the experts help of the control center. This procedure based on autonomous relay robots requires an iterative execution of following procedures by each of the autonomous relay robots: The relay robot determines position data, e.g. based on breakdown or signal level of communication connection. The relay robot positions itself according to the determined position data. If it is not longer possible to keep the communication connection by changing the position of the relay robot, a further relay robot is requested for the communication connection.

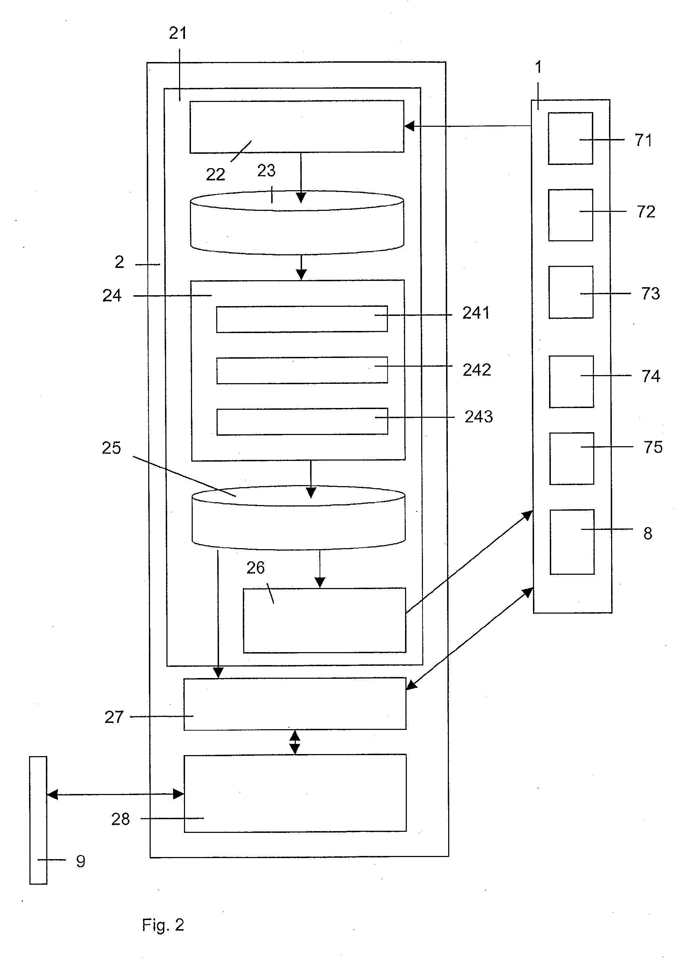

According to a further embodiment of the invention, a centrally executed network planning algorithm is used for determining the positions of the one or more relay robots used to maintain the communication connection between the control center and a mobile robot. This algorithm is preferably executed by the control center, but may be also executed by one or several of the relay robots. In the following, this embodiment is described by hand of Fig. 2 to Fig. 7.

Fig. 2 shows a control center 2, a swarm 1 of robots 71, 72, 73, 74, 75 and 8 and an operator or expert 9.

The robots 71 to 75 are relay robots for supporting the communication between the control center 2 and the robot 8. The robot 8 is preferably a semi-autonomous robot that is controlled and supervised by the operator 9.

The control center 2 comprises one or several interlinked computes, a communication unit for communicating with one or several of the robots 71, 72, 73, 74, 75, 8, input and output means for providing a human machine interface to the operator 9 and various software programs executed by the one or several interlinked computers. The functionalities of the control center 2 described in the following are performed by the execution of these software programs on the aforementioned hardware platform. From functional point of view, the control center 2 comprises a control unit 21, a communication handler 27 and an input/output unit 28.

The input/output unit 28 provides a graphical human machine interface for controlling the robot 8. For example, the input/output unit 28 comprises the input/output means for exchanging information with the operator 9 as well as the specific drivers and command code generators for creating and interpreting the commands and data exchanged with the robot 8. Input/output means are for example a display, a keypad, a mouse, a track ball and various specific input means adapted to the control of the robot 8.

The control unit 21 executes a network planning algorithm for determining optimized positions of one or more of the relay robot 71 to 75. Further, it submits the calculated positioning data to the relay robots 71 to 75 and provides network topology data to the communication handler 27.

From functional point of view, the control unit 21 comprises a map generation unit 27, two memory units 23 and 25, a network planning algorithm 24, and a relay robot control handler 26.

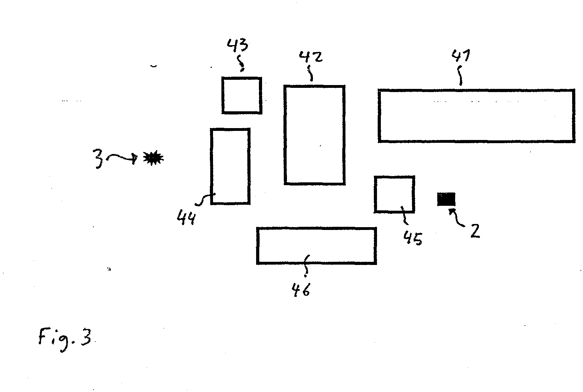

The memory unit 23 comprises a map of the environmental scenario. For example, Fig. 3 shows such a map: Fig. 3 shows the positions of the control center 2, a target 3 and various obstacles 41, 42, 43, 44, 45 and 46, e.g. constituted by buildings.

The map generation unit 22 creates the environmental map. For example, it downloads map data form a central data base, extracts the obstacles and determines the position of the control center 2 and the target 3. The localization of the control center 2 and the target 3 may be done by help of information inputted by the operator 9 or may be done automatically, for example by help of a GPS based localization procedure (GPS = Global Positioning System).

Further, it is possible that the map generation unit 22 creates the map by help of robots of the swarm 1. Such robots are used as scouts to explore the area between the control center 2 and the target 3 and transfer the monitored data to the map generation unit 22.

From functional point of view, the network planning algorithm 24 has a first phase procedure 241 for computing a connectivity graph between the target 3 and the control center 2, a second phase procedure 242 calculating one or more connectivity paths between the target 3 and the control center 2 and a third phase procedure 243 applying an optimization procedure at the calculated connectivity paths.

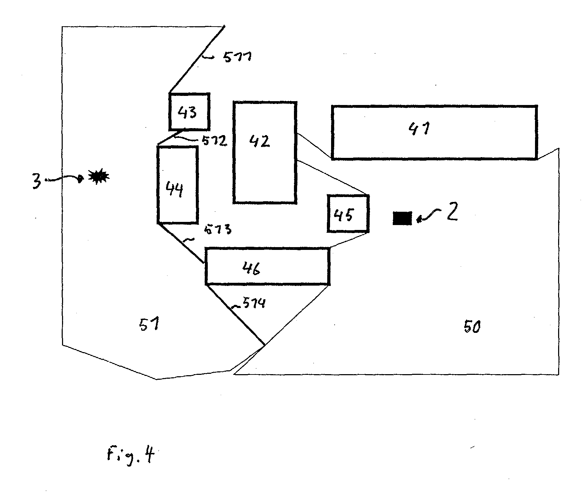

The details of the first phase procedure 241 are described in the following by hand of the figures Fig. 4 to Fig. 6.

In a first step, the first phase procedure 241 only considers the target 3 and the control center 2. Starting from these points, it calculates respective connectivity areas. These connectivity areas are areas which the communication unit of the control center 2 and the communication unit of the robot 8, in case it is located at the position of the target 2, can reach. This computation depends on the characteristic of the communication units used by the control center 2 and the robot 8.

Fig. 4 shows an instance of such calculation. It shows a map with the target 3, the control center 2, the obstacles 41 to 46 and two connectivity areas 51 and 50 calculated by the first phase procedure 241. Each of these connectivity areas is assigned a unique identifier.

In a second step, the first phase procedure 241 segments the borders of the connectivity areas 51 and 50 into continuation segments and blocking segments. Continuation segments are segments that border to open space of sufficient depth. If open spaces are of sufficient depth, depends on the size and versatility of the robot 8. Blocking segments are segments that are not categorized as continuation segment, that means, segments border to obstacles or to open space of insufficient depth. Further, the continuation segments are categorized as continuation segments of type 1 and continuation segments of type 2. Continuation segments of type 1 are those continuation segments that are positioned more in the direction to the control center 2 and the target 3, respectively, than in the opposite direction. For example, the segments 511, 512, 513 and 514 of the connectivity are 51 are continuation segments of type 1.

Further, a general direction between target and control center is defined depending on the topology of the map. Initially, an algorithm parameter specifying a preferred direction has this value.

In a third step, the first phase procedure 241 calculates neighboring connectivity areas for continuation segments. Preferably, the procedure calculates for each of the continuation segments of class 1 the neighboring connectivity area by the following procedure:

The respective continuation segment is moved along the preferred direction until the corresponding reach of the communication unit of a relay robot is reached. The corresponding generating line is the orthogonal projection of the continuation segment orthogonal to the preferred direction. When obstacles are detected along the way the continuation segment may be subdivided in various sub-segments. Each non-blocked sub-segment is continued until it is blocked by a further obstacle and once more subdivided or blocked by exceeding the reach of the communication unit. Further, the moving of the respective continuation segment or sub-segment is blocked when reaching a connectivity area or another neighboring connectivity area, for example the connectivity area of the control center 2 or a neighboring connectivity area of the control center 2, in case of computing a neighboring connectivity area starting from the connectivity area of the target 3. This is continued until the continuation segments or all sub-segments of the continuation segments are entirely blocked. The area that the segment moved over is the corresponding neighboring connectivity area and a unique identifier is assigned to this neighboring connectivity area.

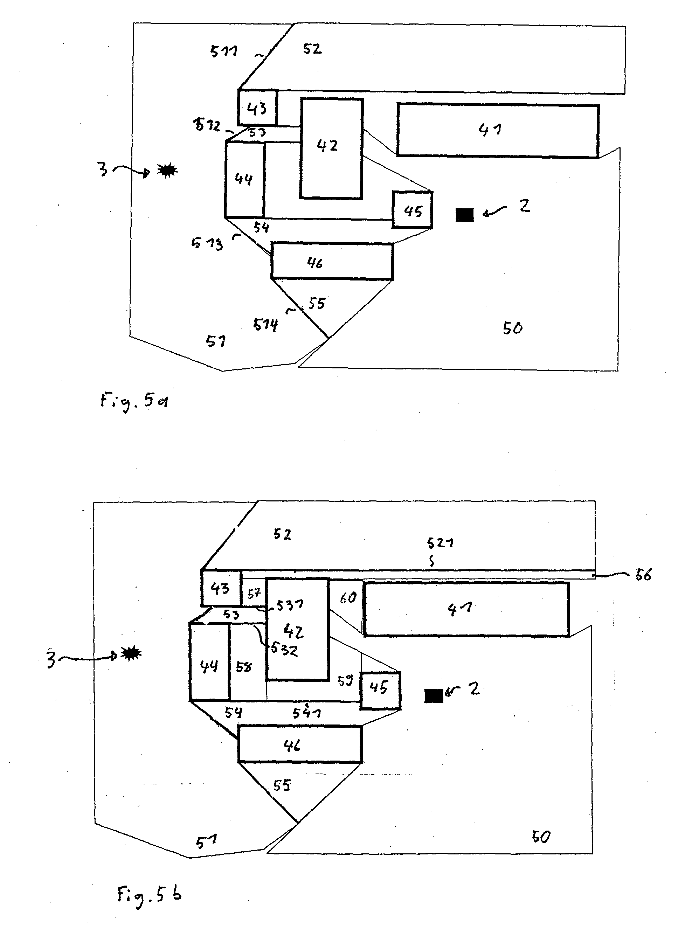

For example, Fig. 5a shows the results of such computation:

Fig. 5a shows a map with the target 3, the control center 2, the connectivity areas 51 and 50, the obstacles 41, 42, 43, 44, 45 and 46 and neighboring connectivity areas 52, 53, 54 and 55. The neighboring connectivity areas 52, 53, 54 and 55 are computed for the continuation segments 511, 512, 513 and 514, respectively.

In a next step continuation segments are calculated for each of the calculated neighboring connectivity areas.

The aforementioned procedure is repeated for the newly calculated continuation segments of class 1. If there are no more continuation segments of class 1, the aforementioned procedure is repeated with a new preferred direction that is orthogonal to the current preferred direction.

Fig. 5b shows an example of such computation:

Fig. 5b shows a map with the target 3, the control center 2, the connectivity areas 51 and 50 and the neighboring connectivity areas 52, 53, 54 and 55. A neighboring connectivity area 56 is calculated based on a determined continuation segment 521 of the neighboring connectivity area 52. Neighboring connectivity areas 57 and 58 are calculated based on the continuation segments 531 and 532. A neighboring connectivity area 59 is calculated based on the continuation segments 541 of the neighboring connectivity area 45. All these computation are done based on a new preferred direction that is orthogonal to the general direction between the target 3 and the control center 2.

It is possible to base the computation of neighboring connectivity areas not on the above-described simplified approach of projecting a continuation segment in a preferred direction, but on a detailed computation of the neighboring connectivity area based on the detailed radiation characteristic of the communication unit of the relay robots. According to such approach, the area which could be reached by a relay robot positioned at the respective continuation segment is calculated for each point of the continuation segment. The result of all such computation forms the neighboring connectivity area. But, such approach would drastically increase the computation efforts for executing the network planning algorithm 241.

In a further step, the first phase algorithm 241 abstracts the connectivity areas found in a graph where each connectivity area corresponds to a node in the graph and the neighborhood of any two connectivity areas is represented by a link.

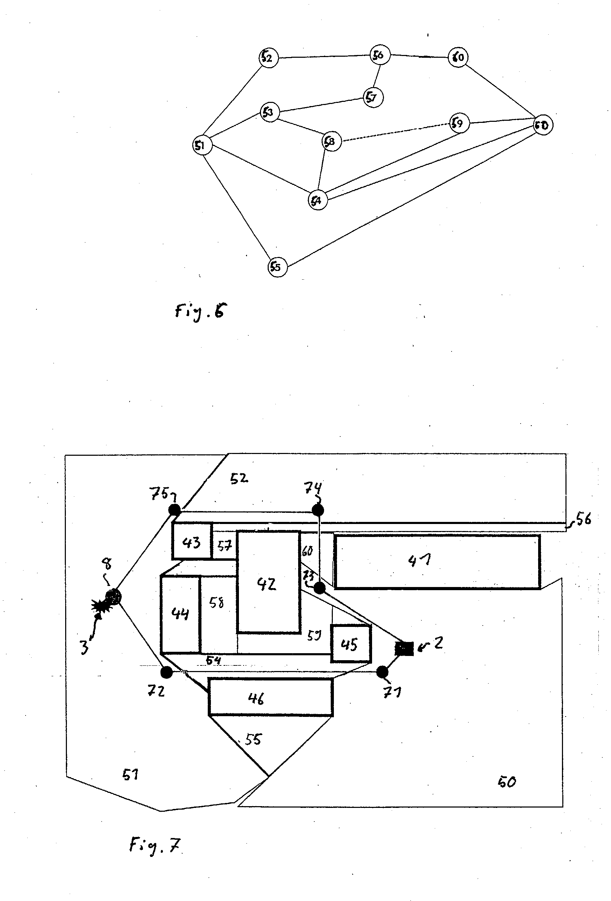

Fig. 6 shows a connectivity graph that corresponds to the connectivity areas found according to the embodiment of Fig. 5b. Fig. 6 shows several nodes representing the connectivity areas 50 to 60 and several links connecting these nodes according to the neighborhood relationship of the connectivity areas 50 to 60.

The second phase procedure 242 calculates one or more connectivity paths between the target 3 and the control center 2. It subdivides the links between two classes. Links of class 1 represent those neighborhood relations where the borders are orthogonal to the corresponding generating line of the neighboring areas. Links of class 2 are those neighborhood relations where the borders are parallel to the corresponding generating lines of the neighboring areas. Due to the topology requirements link of class 2 require more relay stations as links as of class 1, which is respected in the following path calculation and selection procedure. For example, the link between the nodes representing the connectivity areas 58 and 59 is a link of class 1 since the generating line 532 and 541 are orthogonal to the border of these two connectivity areas (see Fig. 5b).

The second phase procedure 242 selects based on the connectivity graph a set of connectivity paths between the target 3 and the control center 2. Selection criteria might be the length of a path, that means the number of relay robots which have to be used for a communication based on this path, and safety requirements, for example to select two paths with disjoint intermediate nodes.

For example, the shortest paths of the connectivity graph demonstrated in Fig. 6 are 51-54-55-50 and 51-55-50. Alternatives are 51-52-56-60-50 and 51-53-58-59-50. To have two paths with disjoint intermediate nodes, the second phase procedure 242 selects the paths 52-54-50 and 51-52-56-60-50.

In the following, the third phase procedure 243 applies an optimization procedure on the selected paths to minimize the number of relay robots needed for the implementation of the selected paths. For example, it omits the relay station associated to the connectivity area 56, which is rendered useless in the overall picture.

But, it is also possible to do the network planning algorithm 24 without the third phase procedure 243.

The calculated network topology and position of the relay robots is stored in the memory unit 24. The relay robot control handler 26 uses the data of the memory unit 25 to navigate the relay robots 71 to 75 and positions these robots at the positions calculated by the network planing algorithm 24.

For example, Fig. 7 shows a map of the entire scenario with the control center 2, the target 3, the robot 8, the relay robots 71 to 75, the obstacles 41 to 46, and the connectivity area 50 to 60. Based on the positioning data calculated by the network planning algorithm 24, the relay robot control handler 26 has positioned the relay robots 71 to 75 so that each of them is close to the border of two connectivity areas. A relay robot is designated for each related link of the connectivity path.

The above-described algorithm is easily extended into three dimensions by stacking the connectivity area neighborhood graphs of the different levels.

Further, it is possible to combine the embodiments according to Fig. 1 and Fig. 2 to Fig. 7 within a system providing a rough network planning by help of the network planning algorithm 24 and a detail adaptation according to the algorithm described by hand of Fig. 1.

## Claims

1. A method of controlling a swarm of robots (11 to 19, 71 to 75, 8), the swarm comprising a plurality of robots (11 to 19, 71 to 75, 8), each having a communication unit for communicating with a control center (2) and/or other robots of the swarm,
**characterized in**
**that** the method comprises the steps of:
determining position data of one or more robots of the swarm that act as relay robots (71 to 75) for supporting the communication between the control center (2) and one or more robots (8) of the swarm acting in the neighborhood of a target (3);
positioning the one or more relay robots (71 to 75) according to the determined position data; and
establishing a communication connection between the control center (2) and the robot (8) acting in the neighborhood of the target (3) via one or more of the positioned relay robots (71, 72).

2. The method of claim 1,
**characterized in**
**that** the method comprising the further step of establishing at least one additional redundant communication connection between the control center (2) and the robot (8) acting in the neighborhood of the target (3) via a different set of positioned relay robots (73, 74. 75).

3. The method of claim 1,
**characterized in**
**that** a control unit (21) executes a network planning algorithm (24) for determining positions of one or more relay robots (71 to 75), the network planning algorithm (24) comprises a first phase procedure (241) computing a connectivity graph between the target (3) and the control center (2) and a second phase procedure (242) calculating one or more connectivity paths between the target (3) and the control center (2).

4. The method of claim 3,
**characterized in**
**that** the network planning algorithm (24) comprises a third phase procedure (243) applying an optimization procedure at the calculated connectivity paths.

5. The method of claim 3,
**characterized in**
**that** the first phase procedure (241) of the algorithm (24) comprises the steps of:
calculating connectivity areas (50, 51), which are areas the communication unit of a robot or the control center can reach;
determining continuation segments that are borders of connectivity areas to opens space;
calculating neighboring connectivity areas (52 to 60) for continuation segments; and
establishing the connectivity graph, wherein a node represents a connectivity area and a link between two nodes represents a neighborhood relationship between two connectivity areas.

6. The method of claim 5,
**characterized in**
**that** the first phase procedure (241) starts from the target (3).

7. The method of claim 5,
**characterized in**
**that** the first phase procedure (241) starts from both, the target (3) and the control center (2).

8. The method of claim 5,
**characterized in**
**that** the first phase procedure (241) comprises the further steps of:
determining a preferred direction between the control center (2) and the target (3);
selecting continuation segments for calculation of neighboring connectivity areas (52, 53, 54, 55) that are in a preferred direction; and
repeating theses steps with a new preferred direction orthogonal to the current preferred direction.

9. The method of claim 5,
**characterized in**
**that** the second phase procedure (242) comprises the further steps of:
determining first class links representing neighborhood relationships where the borders are orthogonal to corresponding generating lines of the neighboring connectivity areas; and
second class links representing neighborhood relationships where the borders are parallel to the corresponding generating lines of the neighboring connectivity areas.

10. A control device (2) for controlling at least one robot (71 to 75, 8) of a swarm (1) of robots, the swarm comprising a plurality of robots (71 to 75, 8) each having a communication unit for communicating with a control center (2) and/or other robots (71 to 75, 8) of the swarm (1),
**characterized in**
**that** the control device (2) comprises a control unit (21) for calculating position data of one or more robots (71 to 75) of the swarm (1) that act as relay robots for supporting the communication between a control center (2) and one or more robots (8) of the swarm acting in the neighborhood of a target (3).
